(19) Europäisches Patentamt
European Patent Office
Office européen des brevets

(11) **EP 2 785 514 B1**

(12) **EUROPÄISCHE PATENTSCHRIFT**

(45) Veröffentlichungstag und Bekanntmachung des Hinweises auf die Patenterteilung:
**11.01.2017 Patentblatt 2017/02**

(21) Anmeldenummer: **12794924.6**

(22) Anmeldetag: **23.11.2012**

(51) Int Cl.:
*B29D 30/00* <sup>(2006.01)</sup>   *B60C 1/00* <sup>(2006.01)</sup>
*B60C 19/00* <sup>(2006.01)</sup>

(86) Internationale Anmeldenummer:
**PCT/EP2012/073453**

(87) Internationale Veröffentlichungsnummer:
**WO 2013/079402 (06.06.2013 Gazette 2013/23)**

(54) **FAHRZEUGLUFTREIFEN MIT VERBESSERTER UNWUCHT**

VEHICLE TIRE WITH IMPROVED IMBALANCE

PNEU DE VEHICULE AVEC MEILLEUR BALOURD

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2011 DE 102011055938**

(43) Veröffentlichungstag der Anmeldung:
**08.10.2014 Patentblatt 2014/41**

(73) Patentinhaber:
• **Continental Reifen Deutschland GmbH**
**30165 Hannover (DE)**
• **Henkel AG & Co. KGaA**
**40589 Düsseldorf (DE)**

(72) Erfinder:
• **MÜLLER-WILKE, Thomas**
**31714 Lauenhagen (DE)**

• **NUNO, Teodoro**
**30419 Hannover (DE)**
• **MÜLLER, Mathias**
**67256 Weisenheim a.S. (DE)**
• **KRÖHL, Oliver**
**50933 Köln (DE)**
• **GRAF, Michael**
**67245 Lambsheim (DE)**
• **RECKERS, Ludger**
**31171 Nordstemmen (DE)**

(74) Vertreter: **Preusser, Andrea**
**Continental Aktiengesellschaft**
**Intellectual Property**
**Postfach 169**
**30001 Hannover (DE)**

(56) Entgegenhaltungen:
**EP-A1- 1 759 893    EP-A1- 2 082 899**
**JP-A- 11 254 921**

## Beschreibung

Die Erfindung betrifft einen Fahrzeugluftreifen mit verbesserter Unwucht.

Hersteller von Fahrzeugluftreifen müssen bestimmte Anforderungen hinsichtlich des Reifenrundlaufs (engl. tire uniformity) beachten und sicherstellen, dass sich etwaige Abweichungen hiervon in einem akzeptablen, oft auch durch gesetzliche Vorgaben bestimmten, Bereich befinden. Bei Nichterfüllung dieser spezifischen Anforderungen muss der Reifen ausrangiert werden, wird als unwuchtig (engl. "imbalanced") deklariert und gelangt als Ausschuss somit nicht in den Verkauf.

Es gibt zwei Arten von Unwucht, eine dynamische und eine statische. Die statische Unwucht resultiert im Wesentlichen auf der ungleichmäßigen Materialverteilung im vulkanisierten Reifen. Dadurch existiert an einer oder mehreren bestimmten lokalen Stellen im Reifen mehr Gewicht als an anderen Stellen. Dies kann unter anderem an einer ungleichmäßigen Verteilung von Kautschukmaterial liegen, die schon beim Aufbau des Reifenrohlings oder bei der Vulkanisation des Reifens entstehen kann. Letzteres gilt auch für eine etwaige ungleichmäßige Verteilung von weiteren Reifenkomponenten, wie beispielsweise Festigkeitsträger.

Eine bisherige Alternative war, solche Stellen im Reifen manuell abzuschleifen.

Das Abschleifen solcher Stellen im Reifen korrigiert allerdings die statische Unwucht nur unzureichend und ist gleichzeitig mit einem zusätzlichen Aufwand während des Produktionsprozesses verbunden, da es in der Regel manuell erfolgen muss. Die entstehenden abgeschliffenen Partikel sind zusätzlich noch gesundheitsgefährdend für die betroffene Arbeitskraft.

Eine andere Möglichkeit zum Ausgleichen der Unwucht besteht darin, bei der Reifenmontage zusätzliche Gewichte auf die Felge aufzubringen. Dies ist seitens der Fahrzeugbesitzer oft unerwünscht, da es den optischen Gesamteindruck von Reifen und Felge beeinträchtigt.

Des Weiteren können Patches zum Ausgleich der Unwucht in den Reifen eingebracht werden.

Der Begriff "Patch" hat sich in der Reifenindustrie mittlerweile etabliert. Als Patch wird ein Formkörper, wie beispielsweise ein Fleck, ein Flicken, ein Füllstück oder eine Art Pflaster bezeichnet, welcher in den Reifen, bevorzugt auf die Innenschicht, aufgebracht oder eingebracht wird.

Das Vorhandensein eines Patches im Reifen ist bereits beispielsweise aus WO2008/051229A1, WO2008/071361A1 oder auch aus EP1985436A1 bekannt. Hier wird das Patch dazu verwendet, um undichte Stellen im Reifen nachträglich abzudichten oder um Undichtigkeit während des Fahrens zu verhindern. Im letzteren Fall wird das Patch als Dichtmittellage bezeichnet und teilweise mit dem Reifen vulkanisiert. Zur optimalen Dichtwirkung sind diese Patches auf der Basis von Polyurethan. Der Einsatz von Polyurethan bedeutet eine Erhöhung der Komplexität bei der Reifenherstellung, da zusätzliche Rohstoffe verarbeitet werden müssen, die in der Regel nicht Bestandteil der verschiedenen Kautschukmischungen des Fahrzeugluftreifens sind.

Aus der EP1759893 und der JPH11254921 ist jeweils ein Fahrzeugluftreifen gemäß dem Oberbegriff des Anspruchs 1 und ein Verfahren gemäß dem Oberbegriff des Anspruchs 16 bekannt.

Die Aufgabe der vorliegenden Erfindung ist es daher, einen Fahrzeugluftreifen in Radialbauart mit einer gasdichten Innenschicht bereitzustellen, der sich durch auszeichnet, dass sich durch das Vorhandensein eines Patches keine oder zumindest eine deutlich verringerte Unwucht ergibt und dass das Patch nicht zu einer Erhöhung der Komplexität bei der Reifenherstellung führt.

Gelöst wird diese Aufgabe dadurch, dass sich auf der Seite der gasdichten Innschicht, welche beim vulkanisierten und montierten Fahrzeugluftreifen der Felge zugewandt ist, wenigstens ein Patch befindet, welches einen oder mehrere Flüssigkautschuke und einen oder mehrere Festkautschuke enthält.

Das Einbringen eines derartigen Patches in den Reifen reduziert bzw. verhindert dauerhaft eine Unwucht des Reifens bedingt durch ungleichmäßige Materialverteilung, welche während des Reifenherstellprozesses auftreten kann. Gleichzeitig findet keine Erhöhung der Komplexität während der Reifenherstellung statt, das das Patch einen oder mehrere Flüssigkautschuke und einen oder mehrere Festkautschuke enthält, die vorzugsweise wesentliche Bestandteile der Kautschukmischungen sind, aus denen der Reifen üblicherweise aufgebaut ist.

Erfindungswesentlich ist daher, dass das Patch des erfindungsgemäßen Fahrzeugluftreifens eine Kautschukzusammensetzung enthält, die einen oder mehrere Flüssigkautschuke und einen oder mehrere Festkautschuke umfasst.

Unter dem Begriff Flüssigkautschuke werden im Rahmen der vorliegenden Erfindung bei 20°C fließfähige Polymere verstanden, die vorzugsweise eine Glasübergangstemperatur ($T_g$) von kleiner als -20°C und besonders bevorzugt von kleiner -40°C aufweisen.

Soweit nicht anders definiert wird im Rahmen der vorliegenden Erfindung die Glasübergangstemperatur ($T_g$) nach DIN 53765 mittels Differential Scanning Calorimetry (DSC) bei einer Heizrate von 20 °C/min unter Verwendung von Stickstoff als Spülgas bestimmt.

Der Begriff "fließfähig" ist der fachkundigen Person bekannt und kennzeichnet das Fließverhalten der Polymere bei 20°C und einem Normaldruck von 101325 Pa. Vorzugsweise werden im Rahmen der vorliegenden Erfindung solche Polymere als "fließfähig" bezeichnet, die bei 20°C eine dynamische Viskosität von 10000 Pa·s oder weniger aufweisen, wobei die dynamische Viskosität nach Brookfield gemäß der DIN 53019 unter Verwendung eines Platte/Platte-Systems der Firma. Physica (Spalt 0,5 mm, Schergeschwindigkeit 1 $s^{-1}$, Plattendurchmesser 25 mm) bestimmt wird.

Das gewichtsmittlere Molekulargewicht ($M_w$) der Flüssigkautschuke der vorliegenden Erfindung ist vorzugsweise kleiner als 80000 g/mol. In einigen besonders bevorzugten Ausführungsformen liegt das gewichtsmittlere Molekulargewicht ($M_w$) der Flüssigkautschuke zwischen 400 g/mol und 40000 g/mol.

Soweit nicht anders vermerkt wird das gewichtsmittlere Molekulargewicht ($M_w$) im Rahmen der vorliegenden Erfindung mittels Gelpermeationschromatographie (GPC) unter Verwendung von Polystyrol als Standard bestimmt.

Die Festkautschuke haben im Vergleich zu den Flüssigkautschuken ein signifikant höheres gewichtsmittleres Molekulargewicht ($M_W$), wobei dieses vorzugsweise über 100000 g/mol liegt. Das gewichtsmittlere Molekulargewicht ($M_W$) der Festkautschuke kann dabei insbesondere zwischen 110000 g/mol und 500000 g/mol liegen.

Die Flüssigkautschuke und Festkautschuke der vorliegenden Erfindung können aus einer großen Anzahl strukturell verschiedener Polymere ausgewählt werden, beispielsweise aus Dien-Kautschukverbindungen, Polyisobutylenen, Polybutenen, Ethylen-Propylen-Copoylmeren, Acrylatkautschuken, Epichlorhydrinkautschuken, Silikonkautschuken, Fluor-Silikon-Kautschuken, chlorsulfonierten Polyethylenen oder thermoplastischen Elastomeren.

Geeignete Flüssigkautschuke werden vorzugsweise ausgewählt aus Polybutadienen, insbesondere 1,4- und /oder 1,2-Polybutadienen, Polybutenen, Polyisoprenen, Polyisobutylenen, Styrol-Butadien-Copolymeren oder Butadien-Acrylnitril-Copolymeren.

Alle vorgenannten Flüssigkautschuke können eine oder mehrere endständige und/oder seitenständige funktionelle Gruppen aufweisen, wobei diese Gruppen vorzugsweise ausgewählt werden aus Halogen-, wie etwa Fluor, Chlor, Brom und/oder Iod, Hydroxy-, Amino-, Carboxyl-, Carbonsäureanhydrid- und/oder Epoxygruppen.

Polyisobutylene werden im Rahmen der vorliegenden Erfindung bevorzugt als Flüssigkautschuke eingesetzt, da durch ihre Verwendung dem Patch eine gute Wärmestabilität und Klebrigkeit verliehen werden kann. Besonders bevorzugte Polyisobutylene weisen dabei ein gewichtsmittleres Molekulargewicht ($M_w$) zwischen 400 g/mol und 40000 g/mol auf.

Der Anteil der Flüssigkautschuke an der Gesamtzusammensetzung des erfindungsgemäß eingesetzten Patches hängt dabei von der gewünschten Klebrigkeit ab. Vorzugsweise beträgt der Anteil der Flüssigkautschuke an der Gesamtmenge des Patches 5 bis 50 Gew.-%, besonders bevorzugt 7 bis 40 Gew.-% und überaus bevorzugt 10 bis 30 Gew.-%.

In einer bevorzugten Ausführungsform beträgt der Anteil der Polyisobutylen-Flüssigkautschuke an der Gesamtzusammensetzung des erfindungsgemäß eingesetzten Patches 5 bis 30 Gew.-%, besonders bevorzugt 8 bis 20 Gew.-% und überaus bevorzugt 10 bis 15 Gew.-%.

Selbstverständlich können auch Mischungen verschiedener Flüssigkautschuke verwendet werden.

Weiterhin enthält das Patches der vorliegenden Erfindung einen oder mehrere Festkautschuke. In einer bevorzugten Ausführungsform der vorliegenden Erfindung wird der Festkautschuk aus Dien-Kautschukverbindungen ausgewählt. Alternativ dazu kann der Festkautschuk beispielsweise auch aus Polyisobutylenen ausgewählt werden.

Der Begriff "Dien-Kautschukverbindung", oft als Dienkautschuk bezeichnet, sind im Sinne der vorliegenden Erfindung vernetzte oder unvernetzte Polymere oder Copolmere, die durch Polymerisation oder Copolymerisation von Dienen gebildet werden. Die Glasübergangstemperatur ($T_g$) der Dien-Kautschukverbindungen ist vorzugsweise kleiner als 0°C, besonders bevorzugt kleiner als -10°C ist.

Bei der Herstellung der Dien-Kautschukverbindungen können beispielsweise konjugierte Diene, wie etwa 1,3-Butadien, 2-Methylbuta-1,3-dien, nicht-konjugierte Diene, wie etwa Penta-1,4-dien, Hexa-1,4-dien, Hexa-1,5-dien, 2,5-Dimethylhexa-1,5-dien und Octa-1,4-dien, cyclische Diene, wie etwa Cyclopentadien, Cyclohexadiene, Cyclooctadiene und/oder Dicyclopentadien und/oder Alkenylnorbornene verwendet werden. Diese oder andere Diene können alleine oder mit weiteren olefinischen Monomeren, wie beispielsweise Acrylaten, vinylaromatischen Verbindungen, wie etwa Styrol, aliphatischen Alkenen, wie etwa Ethylen, Propylen und/oder Butylen, und/oder Acrylnitril zu den entsprechenden Dien-Kautschukverbindungen mittels eines geeigneten Polymerisationsverfahrens umgesetzt werden.

Im Rahmen der vorliegenden Erfindung werden bevorzugte Dien-Festkautschukverbindungen ausgewählt aus Polybutadienen, insbesondere 1,4- und /oder 1,2-Polybutadienen, Polyisoprenen, insbesondere 1,4- und 3,4-Polyisoprenen, Butylkautschuken (Butadien-Isopren Copolymeren), Halobutylkautschuken, Acrylnitrilbutadienkautschuken, Polynorbornen, Styrol-Butadien-Copolymeren, Styrol-Isopren-Butadien-Terpolymeren, Etylen-Propylen-Dien-Copolymeren oder Butadien-Acrylnitril-Copolymeren.

Bespiele für besonders geeignete Dien-Festkautschukverbindungen sind Butylkautschuke, d.h. Butadien-Isopren Copolymere.

Alle vorgenannten Festkautschuke können eine oder mehrere endständige und/oder seitenständige funktionelle Gruppen aufweisen, wobei diese Gruppen vorzugsweise ausgewählt werden aus Halogen-, wie etwa Fluor, Chlor, Brom und/oder Iod, Hydroxy-, Amino-, Carboxyl-, Carbonsäureanhydrid- und/oder Epoxygruppen.

Selbstverständlich können auch Mischungen verschiedener Festkautschuke verwendet werden.

Der Anteil der Festkautschuke an der Gesamtzusammensetzung des erfindungsgemäß eingesetzten Patches hängt dabei von der gewünschten Klebrigkeit und Wärmestandsfestigkeit ab. Vorzugsweise beträgt der Anteil einer oder mehrer Festkautschuke an der Gesamtmenge des Patches 1 bis 30 Gew.-%, besonders bevorzugt 1,5 bis 20 Gew.-% und überaus bevorzugt 2 bis 15 Gew.-%.

In einer bevorzugten Ausführungsform beträgt der Anteil der Festkautschuke, die aus Dien-Kautschukverbindungen ausgewählt werden, an der Gesamtzusammensetzung des erfindungsgemäß eingesetzten Patches 1 bis 10 Gew.-%, besonders bevorzugt 1,5 bis 7 Gew.-% und überaus bevorzugt 2 bis 5 Gew.-%.

Das Patch der vorliegenden zeichnet sich vorzugsweise dadurch aus, dass es selbstklebend ist, d.h., dass es durch einen leichten Anpressdruck auf die gasdichte Innenschicht des Fahrzeugluftreifens aufgebracht werden kann und an der gewünschten Stelle für den vorgesehenen Anwendungszeitraum verbleibt. In der Regel ist es nicht erforderlich, dass das Patch bei der Platzierung auf der gasdichte Innenschicht des Fahrzeugluftreifens erwärmt wird, wodurch eine besonders einfache und kostengünstige Anwendbarkeit erreicht wird.

Die Klebrigkeit sowie die Wärmestandsfähigkeit des Patches kann in einfacher Weise durch das Verhältnis von Flüssigkautschuk zu Festkautschuk eingestellt werden.

Im Hinblick auf die Anwendung in einem Fahrzeugluftreifen werden besonders gute Eigenschaften erreicht, wenn, jeweils bezogen auf die Gesamtmasse des Patches der vorliegenden Erfindung, der Gesamtanteil des Flüssigkautschuks 5 bis 50 Gew.-% und der Gesamtanteil des Festkautschuks 1 bis 30 Gew.-% beträgt.

Insbesondere ist es vorteilhaft, wenn, jeweils bezogen auf die Gesamtmasse des Patches der vorliegenden Erfindung, der Gesamtanteil des Flüssigkautschuks 10 bis 30 Gew.-% und der Gesamtanteil des Festkautschuks 2 bis 15 Gew.-% beträgt.

Falls erforderlich kann das Patch auch ein oder mehrere Additive enthalten. Geeignete Additive können beispielsweise ausgewählt werden aus der Gruppe der klebrigmachenden Harze (Tackifier), Haftvermittler, Weichmacher, Füllstoffe, Stabilisatoren, Rheologiehilfsmittel oder Zähigkeitsvermittler.

Der Anteil einer oder mehrerer Additive an der Gesamtmasse des erfindungsgemäßen Patches liegt vorzugsweise zwischen 10 und 80 Gew.-%, besonders bevorzugt zwischen 20 und 70 Gew.-%.

Als klebrigmachende Harze (Tackifier) oder Haftvermittler eignen sich beispielsweise Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyamino-amide, Anhydride und Anhydrid- enthaltende Copolymere. Auch der Zusatz von Polyepoxidharzen in geringen Mengen (<1 Gew.%) kann in einigen Fällen die Haftung verbessern. Typische klebrigmachende Harze (Tackifier) wie z.B. Terpenphenolharze oder Harzsäurederivate, werden vorzugsweise in Mengen zwischen 5 und 15 Gew.-% verwendet, typische Haftvermittler wie Polyamine, Polyaminoamide oder Resorcinderivate werden im Bereich von 0,1 bis 10 Gew.-% eingesetzt, wobei sich alle Mengenangaben auf die Gesamtmenge des Patches beziehen.

Insbesondere ist es vorteilhaft, dass das Patch zur Verringerung des Schrumpfungsverhaltens und zur weiteren Verbesserung der Wärmestandsfestigkeit einen oder mehrere Füllstoffe enthält. Die einzusetzenden Füllstoffe können aus einer Vielzahl von Materialien ausgewählt werden, wobei Kreiden, natürliche gemahlene oder gefällte Calciumcarbonate, Calcium-Magnesium-Carbonate, Silicate, wie etwa Amluminiumsilicat, Sulfate, wie etwa Bariumsulfat, Schwerspat, Graphit, Ruß, sowie deren beliebige Mischungen bevorzugt sind. Auch blättchenförmige Füllstoffe, wie z.B. Vermiculit, Glimmer, Talk oder ähnliche Schichtsilikate sind als Füllstoffe geeignet. Der Gesamtanteil der Füllstoffe am Patch der vorliegenden Erfindung kann vorzugsweise 10 und 70 Gew.-% und besonders bevorzugt 30 und 60 Gew.-% betragen.

Gegen den thermischen, thermooxidativen oder Ozonabbau der erfindungsgemäßen Patches können konventionelle Stabilisatoren, wie z.B. sterisch gehinderte Phenole oder Aminderivate eingesetzt werden, typische Mengenbereiche für diese Stabilisatoren sind 0,1 bis 5 Gew.-%.

Vorzugsweise enthält das Patch zumindest Ruß als Füllstoff

In einer besonders bevorzugten Ausführungsform hat der Ruß eine Iodzahl, gemäß ASTM D 1510, die auch als Iodabsorptionszahl bezeichnet wird, größer oder gleich 75 g / kg und einer DBP-Zahl größer oder gleich 80 cm$^3$/100g. Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Russtyps in dem Patch gewährleistet einen bestmöglichen Kompromiss aus Abriebwiderstand und Wärmeaufbau. Bevorzugt ist hierbei, wenn lediglich ein Rußtyp verwendet wird, es können aber auch verschiedene Russtypen verwendet werden.

In einer bevorzugten Ausführungsform enthält das Patch folgende Bestandteile, jeweils bezogen auf die Gesamtmenge des Patches:

a) 1 bis 30 Gew.-% eines oder mehrer Festkautschuke;
b) 5 bis 50 Gew.-% eines oder mehrer Flüssigkautschuke; und
c) 20 bis 80 Gew.-% eines oder mehrerer Additive.

In einer weiteren bevorzugten Ausführungsform enthält das Patch folgende Bestandteile, jeweils bezogen auf die Gesamtmenge des Patches:

a) 1 bis 30 Gew.-% eines oder mehrer Festkautschuke;
b) 5 bis 50 Gew.-% eines oder mehrer Flüssigkautschuke;
c) 10 bis 50 Gew.-% eines oder mehrer Füllstoffe, darunter, bezogen auf die Gesamtmenge des Patches, 2 bis 20 Gew.-% Ruß; und
d) 10 bis 30 Gew.-% eines oder mehrerer weiterer Additive, die sich von Komponente c) unterscheiden.

Das in der vorliegenden Erfindung eingesetzte Patch kann aus einer, zwei oder mehr

Schichten bestehen. Hierbei ist es vorteilhaft, dass die mit der gasdichten Innenschicht des erfindungsgemäßen Fahrzeugluftreifens in direktem Kontakt stehende Schicht des Patches selbstklebend ist, da auf diese Weise, wie oben beschrieben, eine besonders einfache und kostengünstige Anwendbarkeit des Patches erreicht wird.

Bei einem zwei oder mehrschichtigen Aufbau des Patches weist die mit der gasdichten Innenschicht des erfindungsgemäßen Fahrzeugluftreifens in direktem Kontakt stehende Schicht des Patches höhere Hafteigenschaften, d.h. eine höhere Klebkraft auf, als die äußere Schicht des Patches. Unter der "äußeren Schicht" wird diejenige Schicht des Patches verstanden, die von der Innenseite des erfindungsgemäßen Fahrzeugluftreifens am weitesten entfernt ist. Die äußere Schicht des Patches ähnelt in ihrer Klebkraft und Optik vorzugsweise der Innenschicht des Fahrzeugluftreifens, wodurch verhindert wird, dass das Vorhandensein des Patches optisch auffällt.

Für den Fall eines zwei oder mehrschichtigen Aufbau des Patches ist es dabei zwingend erforderlich, dass zumindest die mit der gasdichten Innenschicht des erfindungsgemäßen Fahrzeugluftreifens in direktem Kontakt stehende Schicht einen oder mehrere Flüssigkautschuke und einen oder mehrere Festkautschuke der vorliegenden Erfindung umfasst. Die weitere(n) Schicht(en) können ebenfalls einen oder mehrere Flüssigkautschuke und/oder einen oder mehrere Festkautschuke enthalten, wobei es vorteilhaft ist, wenn die äußere Schicht nur einen oder mehrere Festkautschuke der vorliegenden Erfindung enthält. Insbesondere ist es bevorzugt, wenn die äußere Schicht nur Polyisobutylen als Festkautschuk umfasst, wobei das genannte Polyisobutylen vorzugsweise ein gewichtsmittleres Molekulargewicht zwischen 110000 g/mol und 500000 g/mol aufweist.

Um einen geringen Materialeinsatz und hohe Positionstreue im Anwendungszeitraum zu erreichen, ist es vorteilhaft, dass das Patch der vorliegenden Erfindung eine Dichte von mindestens 1,6 g /cm$^3$ aufweist.

Im Rahmen der vorliegenden Erfindung wird die Dichte des Patches mittels der Wasserauftriebsmethode bestimmt, indem das Patch bei 23°C an der Luft und in destilliertem Wasser gewogen wird. Die Dichte des Patches berechnet sich dann nach der folgenden Formel:

$$\text{Dichte} = \cfrac{m\ [\text{Luft}]}{\cfrac{(m\ [\text{Luft}] - m\ [\text{Wasser}])}{\text{Dichte}\ [\text{Wasser},\ 23°C]}}$$

wobei als Wasserdichte bei 23°C der Wert von 0,99756 g/cm$^3$ verwendet wird.

Ein weiterer Gegenstand der vorliegenden Erfindung ist ein Verfahren zur Herstellung eines erfindungsgemäßen Fahrzeugluftreifens, wobei nach der Vulkanisation des Fahrzeugluftreifens wenigstens ein Patch, enthaltend einen oder mehrere Flüssigkautschuke und einen oder mehrere Festkautschuke, auf der Seite der gasdichten Innenschicht, welche beim vulkanisierten und montierten Fahrzeugluftreifen der Felge zugewandt ist, aufgebracht wird. Alle im Rahmen des erfindungsgemäßen Fahrzeugluftreifens offenbarten Ausführungsformen des Patches gelten in analoger Weise auch für dessen Einsatz im o.g. Verfahren.

Das Einbringen des Patches in den Fahrzeugluftreifen kann nach dem folgenden Vorgehen erfolgen:

Nach der Vulkanisation des Fahrzeugluftreifens wird die statische Unwucht ermittelt und der entsprechende Reifen aus der Produktionslinie entfernt. Anschließend wird die Stelle oder gegebenenfalls mehrere Stellen mit ungleichmäßiger Materialverteilung bestimmt.

Ausgehend von diesen Unwuchtstellen wird in einer Position jeweils in 180° Entfernung von den Unwuchtstellen ein Patch aufgebracht. Das Gewicht des Patches ist jeweils ausreichend, damit der Reifenrundlauf anschließend in einem akzeptablen Bereich ist.

Insbesondere ist es vorteilhaft, wenn das Patch eine Dichte von mindestens 1,6 g /cm$^3$ aufweist.

Das Patch kann hierbei selbstklebend sein oder durch einen geeigneten Kleber auf die Innenschicht aufgebracht werden. Üblicherweise findet das Aufbringen des Patches bei 5°C bis 40°C, vorzugsweise bei 15°C bis 35°C und ganz besonders bevorzug bei 20°C bis 25°C statt, wobei die Innenschicht des Reifens vorher gereinigt werden sollte, um etwaige Rückstände aus der Vulkanisierform zu entfernen. Idealerweise ist eine Reinigung mit Wasser ausreichend, d.h. es werden in der Regel keine umweltbelastenden und / oder gesundheitsbelastenden anorganischen oder organischen Reinigungs- und / oder Lösemittel benötigt.

Ein weiterer Gegenstand der vorliegenden Erfindung ist die Verwendung des erfindungsgemäß eingesetzten Patches zur Verringerung oder Beseitigung der Unwucht von Fahrzeugluftreifen. Alle im Rahmen des erfindungsgemäßen Fahrzeugluftreifens offenbarten Ausführungsformen des Patches gelten in analoger Weise für dessen o.g. Verwendung.

## Patentansprüche

1. Fahrzeugluftreifen in Radialbauart mit einer gasdichten Innenschicht, wobei sich auf der Seite der gasdichten Innenschicht, welche beim vulkanisierten und montierten Fahrzeugluftreifen der Felge zugewandt ist, wenigstens ein Patch befindet, **dadurch gekennzeichnet, dass** das Patch einen oder mehrere Flüssigkautschuke und einen oder mehrere Festkautschuke enthält.

2. Fahrzeugluftreifen nach Anspruch 1, **dadurch gekennzeichnet, dass** der Festkautschuk und der Flüssigkautschuk ausgewählt werden aus der Gruppe bestehend aus Dien-Kautschukverbindungen, Polyisobutylenen, Polybutenen, Ethylen-Propylen-Copoylmeren, Acrylatkautschuken, Epichlorhydrinkautschuken, Silikonkautschuken, Fluor-Silikon-Kautschuken, chlorsulfonierten Polyethylenen und/oder thermoplastischen Elastomeren.

3. Fahrzeugluftreifen nach Anspruch 1 oder 2, **dadurch gekennzeichnet, dass** der Flüssigkautschuk ausgewählt wird aus Polybutadienen.

4. Fahrzeugluftreifen nach mindestens einem der Ansprüche 1 bis 3, **dadurch gekennzeichnet, dass** der Flüssigkautschuk ein gewichtsmittleres Molekulargewicht ($M_w$) zwischen 400 g/mol und 40000 g/mol aufweist.

5. Fahrzeugluftreifen nach mindestens einem der Ansprüche 1 bis 4, **dadurch gekennzeichnet, dass** der Anteil der Flüssigkautschuke an der Gesamtmenge des Patches 5 bis 50 Gew.-% beträgt.

6. Fahrzeugluftreifen nach mindestens einem der Ansprüche 1 bis 5, **dadurch gekennzeichnet, dass** der Festkautschuk ausgewählt wird aus Dien-Kautschukverbindungen, insbesondere aus Butylkautschuken.

7. Fahrzeugluftreifen nach mindestens einem der Ansprüche 1 bis 6, **dadurch gekennzeichnet, dass** der Festkautschuk ein gewichtsmittleres Molekulargewicht ($M_w$) zwischen 110000 g/mol und 500000 g/mol aufweist.

8. Fahrzeugluftreifen nach mindestens einem der Ansprüche 1 bis 7, **dadurch gekennzeichnet, dass** der Anteil der Festkautschuke an der Gesamtmenge des Patches 1 bis 30 Gew.-% beträgt.

9. Fahrzeugluftreifen nach mindestens einem der Ansprüche 1 bis 8, **dadurch gekennzeichnet, dass,** bezogen auf die Gesamtmasse des Patches, der Gesamtanteil des Flüssigkautschuks 10 bis 30 Gew.-% und der Gesamtanteil des Festkautschuks 2 bis 15 Gew.-% beträgt.

10. Fahrzeugluftreifen nach mindestens einem der Ansprüche 1 bis 9, **dadurch gekennzeichnet, dass** das Patch zusätzlich wenigstens einen Füllstoff enthält.

11. Fahrzeugluftreifen nach Anspruch 10, **dadurch gekennzeichnet, dass** der Füllstoff Ruß ist.

12. Fahrzeugluftreifen nach mindestens einem der Ansprüche 1 bis 11, **dadurch gekennzeichnet, dass** das Patch eine Dichte von mindestens 1,6 g/cm$^3$ aufweist.

13. Fahrzeugluftreifen nach mindestens einem der Ansprüche 1 bis 12, **dadurch gekennzeichnet, dass** das Patch aus einer Schicht besteht.

14. Fahrzeugluftreifen nach mindestens einem der Ansprüche 1 bis 12, **dadurch gekennzeichnet, dass** das Patch aus zwei oder mehr Schichten besteht.

**15.** Verwendung eines Patches, enthaltend einen oder mehrere Flüssigkautschuke und einen oder mehrere Festkautschuke zur Verringerung oder Beseitigung der Unwucht von Fahrzeugluftreifen.

**16.** Verfahren zur Herstellung eines Fahrzeugluftreifens, **dadurch gekennzeichnet, dass** nach der Vulkanisation des Fahrzeugluftreifens wenigstens ein Patch, enthaltend einen oder mehrere Flüssigkautschuke und einen oder mehrere Festkautschuke, auf der Seite der gasdichten Innenschicht, welche beim vulkanisierten und montierten Fahrzeugluftreifen der Felge zugewandt ist, aufgebracht wird.

**17.** Verfahren zur Herstellung eines Fahrzeugluftreifens nach Anspruch 16 **, dadurch gekennzeichnet, dass** das Patch bei einer Temperatur von 5°C bis 40°C, vorzugsweise von 15°C bis 35°C und ganz besonders bevorzug bei 20°C bis 25°C auf der Seite der gasdichten Innenschicht, welche beim vulkanisierten und montierten Fahrzeugluftreifen der Felge zugewandt ist, aufgebracht wird.


**Claims**

**1.** Radial pneumatic tyre with a gas-tight internal layer where, on that side of the gas-tight internal layer that, in the vulcanized and installed pneumatic tyre, faces towards the wheel rim, there is at least one patch, **characterized in that** the patch comprises one or more liquid rubbers and one or more solid rubbers.

**2.** Pneumatic tyre according to Claim 1, **characterized in that** the solid rubber and the liquid rubber are selected from the group consisting of diene rubber compounds, polyisobutylenes, polybutenes, ethylene-propylene copolymers, acrylate rubbers, epichlorohydrin rubbers, silicone rubbers, fluorosilicone rubbers, chlorosulfonated polyethylenes and/or thermoplastic elastomers.

**3.** Pneumatic tyre according to Claim 1 or 2, **characterized in that** the liquid rubber is selected from polybutadienes.

**4.** Pneumatic tyre according to at least one of Claims 1 to 3, **characterized in that** the weight-average molecular weight ($M_w$) of the liquid rubber is from 400 g/mol to 40 000 g/mol.

**5.** Pneumatic tyre according to at least one of Claims 1 to 4, **characterized in that** the proportion of the liquid rubbers, based on the total quantity of the patch, is from 5 to 50% by weight.

**6.** Pneumatic tyre according to at least one of Claims 1 to 5, **characterized in that** the solid rubber is selected from diene rubber compounds, in particular from butyl rubbers.

**7.** Pneumatic tyre according to at least one of Claims 1 to 6, **characterized in that** the weight-average molecular weight ($M_w$) of the solid rubber is from 110 000 g/mol to 500 000 g/mol.

**8.** Pneumatic tyre according to at least one of Claims 1 to 7, **characterized in that** the proportion of the solid rubbers, based on the total quantity of the patch, is from 1 to 30% by weight.

**9.** Pneumatic tyre according to at least one of Claims 1 to 8, **characterized in that**, based on the total mass of the patch, the total proportion of the liquid rubber is from 10 to 30% by weight and the total proportion of the solid rubber is from 2 to 15% by weight.

**10.** Pneumatic tyre according to at least one of Claims 1 to 9, **characterized in that** the patch additionally comprises at least one filler.

**11.** Pneumatic tyre according to Claim 10, **characterized in that** the filler is carbon black.

**12.** Pneumatic tyre according to at least one of Claims 1 to 11, **characterized in that** the density of the patch is at least 1.6 g/cm$^3$.

**13.** Pneumatic tyre according to at least one of Claims 1 to 12, **characterized in that** the patch is composed of one layer.

**14.** Pneumatic tyre according to at least one of Claims 1 to 12, **characterized in that** the patch is composed of two or more layers.

**15.** Use of a patch comprising one or more liquid rubbers and one or more solid rubbers for the reduction or elimination of imbalance of pneumatic tyres.

**16.** Process for the production of a pneumatic tyre, **characterized in that** after the vulcanization of the pneumatic tyre at least one patch comprising one or more liquid rubbers and one or more solid rubbers is applied on that side of the gas-tight internal layer that, in the vulcanized and installed pneumatic tyre, faces towards the wheel rim.

**17.** Process for the production of a pneumatic tyre according to Claim 16, **characterized in that** the patch is applied at a temperature of from 5°C to 40°C, preferably from 15°C to 35°C and very particularly preferably at from 20°C to 25°C on that side of the gas-tight internal layer that, in the vulcanized and installed pneumatic tyre, faces towards the wheel rim.

**Revendications**

**1.** Pneu pour véhicule de type à structure radiale, présentant une couche interne étanche au gaz, au moins un patch se trouvant sur le côté de la couche interne étanche au gaz qui est orienté, lorsque le pneu pour véhicule est vulcanisé et monté, vers la jante, **caractérisé en ce que** le patch contient un ou plusieurs caoutchoucs liquides et un ou plusieurs caoutchoucs solides.

**2.** Pneu pour véhicule selon la revendication 1, **caractérisé en ce que** le caoutchouc solide et le caoutchouc liquide sont choisis dans le groupe constitué par les composés de caoutchouc de diène, les polyisobutylènes, les polybutènes, les copolymères d'éthylène-propylène, les caoutchoucs d'acrylate, les caoutchoucs d'épichlorhydrine, les caoutchoucs de silicone, les caoutchoucs de fluorosilicone, les polyéthylènes chlorosulfonés et/ou les élastomères thermoplastiques.

**3.** Pneu pour véhicule selon la revendication 1 ou 2, **caractérisé en ce que** le caoutchouc liquide est choisi parmi les polybutadiènes.

**4.** Pneu pour véhicule selon au moins l'une quelconque des revendications 1 à 3, **caractérisé en ce que** le caoutchouc liquide présente un poids moléculaire pondéral moyen ($M_w$) entre 400 g/mole et 40.000 g/mole.

**5.** Pneu pour véhicule selon au moins l'une quelconque des revendications 1 à 4, **caractérisé en ce que** la proportion des caoutchoucs liquides par rapport à la quantité totale du patch est de 5 à 50% en poids.

**6.** Pneu pour véhicule selon au moins l'une quelconque des revendications 1 à 5, **caractérisé en ce que** le caoutchouc solide est choisi parmi les composés de caoutchouc de diène, en particulier les caoutchoucs de butyle.

**7.** Pneu pour véhicule selon au moins l'une quelconque des revendications 1 à 6, **caractérisé en ce que** le caoutchouc solide présente un poids moléculaire pondéral moyen ($M_w$) entre 110.000 g/mole et 500.000 g/mole.

**8.** Pneu pour véhicule selon au moins l'une quelconque des revendications 1 à 7, **caractérisé en ce que** la proportion des caoutchoucs solides par rapport à la quantité totale du patch est de 1 à 30% en poids.

**9.** Pneu pour véhicule selon au moins l'une quelconque des revendications 1 à 8, **caractérisé en ce que**, par rapport à la masse totale du patch, la proportion totale du caoutchouc liquide est de 10 à 30% en poids et la proportion totale du caoutchouc solide est de 2 à 15% en poids.

**10.** Pneu pour véhicule selon au moins l'une quelconque des revendications 1 à 9, **caractérisé en ce que** le patch contient en plus au moins une charge.

**11.** Pneu pour véhicule selon la revendication 10, **caractérisé en ce que** la charge est de la suie.

**12.** Pneu pour véhicule selon au moins l'une quelconque des revendications 1 à 11, **caractérisé en ce que** le patch présente une densité d'au moins 1,6 g/cm$^3$.

**13.** Pneu pour véhicule selon au moins l'une quelconque des revendications 1 à 12, **caractérisé en ce que** le patch est constitué par une couche.

**14.** Pneu pour véhicule selon au moins l'une quelconque des revendications 1 à 12, **caractérisé en ce que** le patch est constitué par deux couches ou plus.

**15.** Utilisation d'un patch, contenant un ou plusieurs caoutchoucs liquides et un ou plusieurs caoutchoucs solides pour diminuer ou éliminer le déséquilibrage de pneus pour véhicule.

**16.** Procédé pour la fabrication d'un pneu pour véhicule, **caractérisé en ce qu'**après la vulcanisation du pneu pour véhicule, on applique au moins un patch, contenant un ou plusieurs caoutchoucs liquides et un ou plusieurs caoutchoucs solides, sur le côté de la couche interne étanche au gaz qui est orienté, lorsque le pneu pour véhicule est vulcanisé et monté, vers la jante.

**17.** Procédé pour la fabrication d'un pneu pour véhicule selon la revendication 16, **caractérisé en ce que** le patch est appliqué à une température de 5°C à 40°C, de préférence de 15°C à 35°C et de manière tout particulièrement préférée de 20°C à 25°C sur le côté de la couche interne étanche au gaz qui est orienté, dans l'état vulcanisé et monté du pneu pour véhicule, vers la jante.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008051229 A1
- WO 2008071361 A1
- EP 1985436 A1
- EP 1759893 A
- JP H11254921 B